# EUROPEAN PATENT APPLICATION

(11) **EP 1 237 265 A1**
(43) Date of publication of application: **04.09.2002**
(21) Application number: 01200753.0
(22) Date of filing: 28.02.2001
(51) Int. Cl.: H02M 3/07

(54) **Power efficient integrated charge pump using clock gating**

(71) Applicant: EM Microelectronic-Marin SA, 2074 Marin (CH)
(72) Inventor: Dean, Allum, Monument, Colorado 80132 (US)
(74) Representative: Surmely, Gérard

(57) **Abstract**

A voltage multiplier circuit in particular for programmable memories is supplied by a low voltage. This circuit includes an oscillator which generates a clock signal and a charge pump circuit controlled by the clock signal. The charge pump boosts a DC supply voltage to a high voltage which is looped back to a voltage feedback regulator. A multiplexer which is placed between the oscillator and the charge pump, receives a gating signal from the regulator which depends on the comparison of the high output voltage to a determined regulation voltage.

## Description

The present invention generally relates to reducing current consumption in voltage multiplier circuits used for programmable memories, and more particularly to an integrated circuit including an oscillator which generates a clock signal, a charge pump circuit which generates a high voltage for programming memories and a regulation feedback loop for controlling the high voltage level.

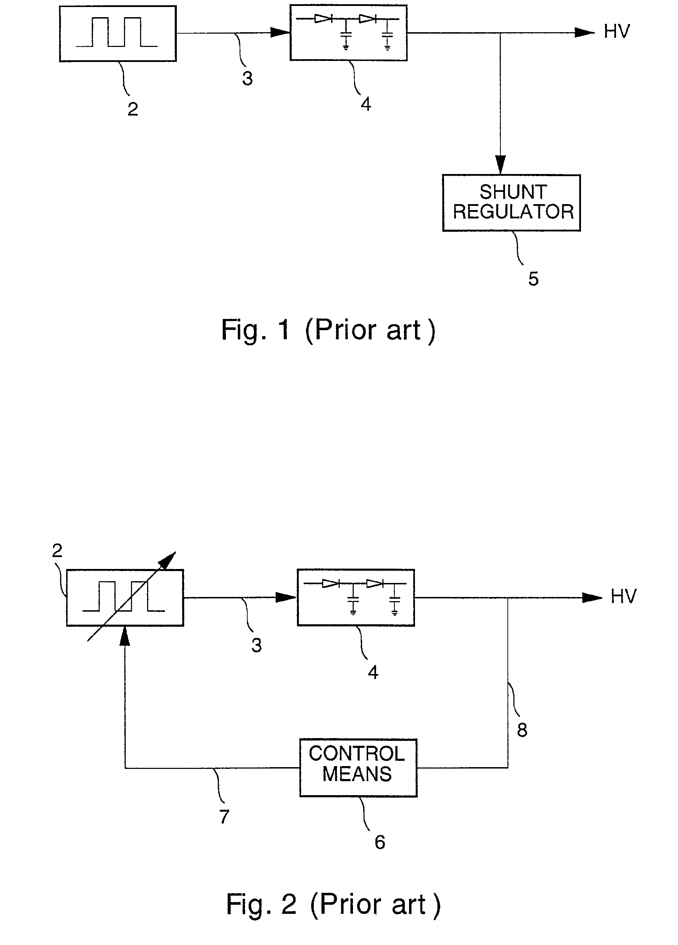

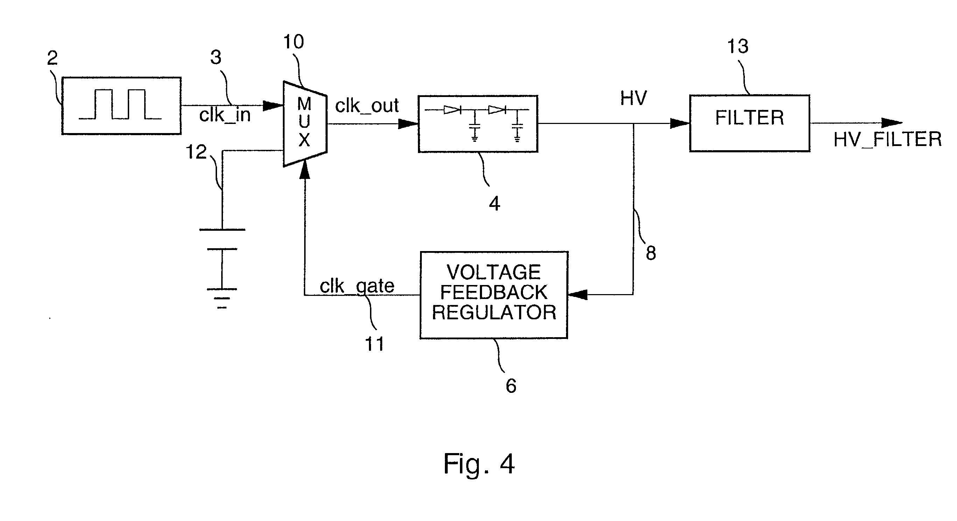

In the prior art, as illustrated in Figure 1, the voltage multiplier circuit is well known to those skilled in the art. The circuit shown comprises an oscillator 2 which generates a clock signal 3. A charge pump 4, for example a Dickson circuit described in IEEE Journal of Solid-State Circuits, vol. SC11, pages 374-378, June 1976, wherein a plurality of stages composed of diodes and capacitors are cascaded, receives at its input a DC supply voltage which is raised to a determined high voltage HV at its output. The elevation of the DC supply voltage through the charge pump 4 is controlled by the clock signal 3 provided by the oscillator 2. The high output voltage HV may be used to program cells of memories such as EEPROMs.

Such integrated voltage multiplier circuits are designed so that the minimum high output voltage level is still obtained under worse case conditions. Most of the time, the charge pump 4 would produce a higher output voltage, but this voltage is limited by a shunt regulator 5 so that the output voltage remains the same for all operating conditions. The shunted current, which occurs the majority of the time, represents wasted power.

In the prior art, some solutions using a feedback loop to control the high voltage output exist. Such a circuit is known from US Patent No. 5,561,385. This Patent discloses a voltage multiplier circuit with feedback control generating a high voltage for programming memories.

As illustrated in Figure 2, this circuit includes a charge pump 4 which elevates a DC supply voltage to a determined high output regulation voltage Vreg. Conventionally the charge pump 4 is composed of a plurality of stages in a cascade arrangement formed by a switching circuit and a storage capacitor which is not shown. The circuit also includes a variable frequency oscillator 2 for generating a variable frequency clock signal 3 in accordance with control signals 7, and a feedback loop 8 including output voltage control means 6 for detecting the level of the output voltage HV maintained by the charge pump so as to generate said control signals 7 for controlling the variable frequency oscillator 2.

According to the magnitude of the difference between the determined output regulation voltage Vreg and the output voltage HV, the output voltage control means 6 generate the control signals 7 in a large magnitude and or in a small magnitude, thereby increasing or decreasing the frequency of the variable frequency oscillator 2. Thus, the power for the charge pumping is adjusted, and the output voltage HV is maintained close to the determined output regulation voltage Vreg.

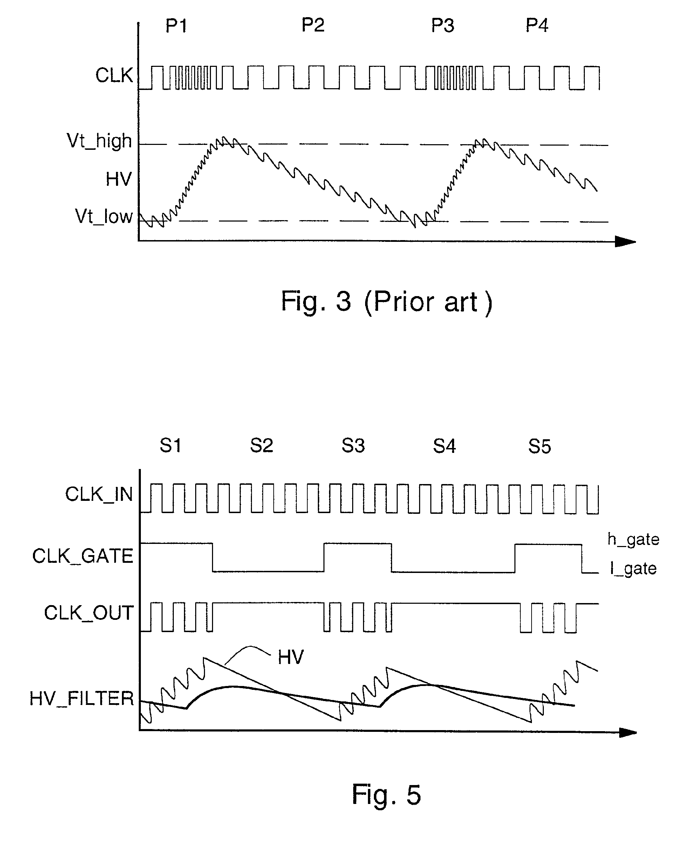

Figure 3 shows the output voltage HV of the voltage multiplier circuit according to Figure 2 and the corresponding clock signal 3 provided by the variable frequency oscillator 2 to the charge pump 4.

Generally, two threshold voltages are taken to provide an output voltage HV close to the determined voltage Vreg. Vt_low is the low threshold voltage which commands the variable frequency oscillator 2 to increase the clock frequency. And Vt_high is the high threshold voltage which commands the oscillator 2 to decrease the clock frequency. Furthermore, the variable frequency oscillator needs to have two limit frequencies, a lower limit and an upper limit. Variations between these two extreme frequencies are made linearly.

The first phase P1 represents an increasing frequency pumping-up period of the charge pump. This first phase P1 lasts until the difference between the high threshold voltage Vt_high and the output voltage HV is positive. The second phase P2 represents a decreasing frequency pumping-up period. This second phase P2 lasts until the difference between the low threshold voltage Vt_low and the output voltage HV is negative. In accordance with these two phases P1 and P2 the clock frequency is adjusted by respectively increasing and decreasing said frequency linearly. The following phases P3 and P4 show the periodic regulation of the output voltage HV. Thus, the output voltage HV is maintained close to the determined voltage Vreg.

However, this solution for reducing current consumption has some drawbacks. The charge pump of this circuit is conventionally controlled by a biphase or quadriphase clock with non-interlaced signals which uses inverters. These inverters consume high current when the clock signal pulses up or pulses down. Further, storage capacitors used in the charge pump consume current when changing state from charge to discharge or conversely. Even if the clock frequency is reduced, the charge pump still consumes more current than needed to supply the programmable memory efficiently.

Furthermore, a variable frequency oscillator generates many constraints. Such an oscillator occupies a large surface area on the integrated circuit, additional surface is taken to reduce the effect of process variation, to guarantee a supply voltage range and to allow operations over a full temperature range. Upper and lower frequency limits must be defined for the clock signal frequency generation. Also, a start up frequency must be defined. Finally, the current consumed by the variable frequency oscillator itself becomes an important current consumer in such a low current consumption circuit.

The object of the present invention is to overcome the aforecited drawbacks of the prior art and, in particular, to provide a voltage multiplier circuit with low current consumption, which avoids the constraints generated by using a variable frequency oscillator.

These objects are achieved as a result of a voltage multiplier circuit as defined hereinbefore and characterized in that it further includes means for gating clock signals which are placed in the regulation feedback loop between the oscillator and the charge pump circuit, said means receiving a gating signal from the feedback circuit, which depends on the comparison of said high output voltage to a determined regulation voltage.

Thus, the current consumption is reduced by using feedback regulation of the output voltage and the constraints generated by using a variable frequency oscillator are avoided by looping the feedback regulation after generation of the clock signal, so a simple oscillator could be used.

Further, the high output voltage is filtered by using a transistor with a low threshold voltage in order to limit output voltage variations.

Preferably, the means for gating the clock signal are a multiplexer supplied by a DC voltage. This multiplexer receives the clock signal generated by the oscillator which is multiplexed with the supply voltage. Multiplexing is controlled by the gating signal generated by the feedback circuit in order to let one pass.

The gating signal is a digital data item which comprises at least two levels, a high and a low level. When the gating signal is at its low level, the multiplexed signal is at a fixed value. When the clock gating signal is at its high level, the multiplexed signal is a copy of the clock signal generated by the oscillator.

In a preferred embodiment of the invention, the feedback circuit is a voltage feedback regulator notably including voltage amplitude control means which modify a feedback_out potential controlling digitizing means. The voltage amplitude control means are formed by voltage dropping means which lower the output high voltage of the circuit in a down level shifted voltage, and by switching means which command the feedback_out potential and decouple the down level shifted voltage from the input voltage of the digitizing means.

The digitizing means are, advantageously, a hysteresis trigger which has two different threshold voltages which command both levels of the gating signal.

The voltage feedback regulator further includes a stabilization capacitor to eliminate oscillations.

Advantageously, the voltage feedback regulator includes furthermore, ramp rate control means. These means preferably comprise a capacitor and a transistor.

Other features and advantages of the invention will appear from the following description of particular embodiments of the invention, given by way of non-limiting examples, with reference to the annexed drawings, in which :
- Figure 1, is a block diagram of a voltage multiplier circuit according to the prior art;
- Figure 2, is a block diagram of a voltage multiplier circuit with a feedback loop according to another prior art embodiment;
- Figure 3, is the output voltage graph corresponding to the variable clock frequency signal according to Figure 2;
- Figure 4, is a block diagram of a voltage multiplier circuit with a feedback loop according to the invention;
- Figure 5 shows the evolution of the high output voltage as a function of the multiplexed signal, according to Figure 4;
- Figure 6, is a simplified schematic diagram of the voltage feedback regulator according to the invention;
- Figure 7A, is the evolution of the gating signal relative to feedback and feedback_out potentials of the voltage feedback regulator;
- Figure 7B, is the evolution of the output voltage during the start of the charge pump when using ramp rate control means;
- Figure 8, is a detailed schematic diagram of the voltage feedback regulator according to the preferred embodiment of the invention;
- Figure 9, is a block diagram of a voltage multiplier circuit with a feedback loop according to another embodiment of the invention;
- Figure 10, is a block diagram of a voltage multiplier circuit with a feedback loop using biphased clock signals according to the invention.

Figures 1 to 3 have already been described in relation to the prior art.

Figure 4 shows a voltage multiplier circuit with a feedback control according to the invention. Typically such a circuit is supplied by a low voltage generator. The different elements of the circuit need to be supplied by such a generator.

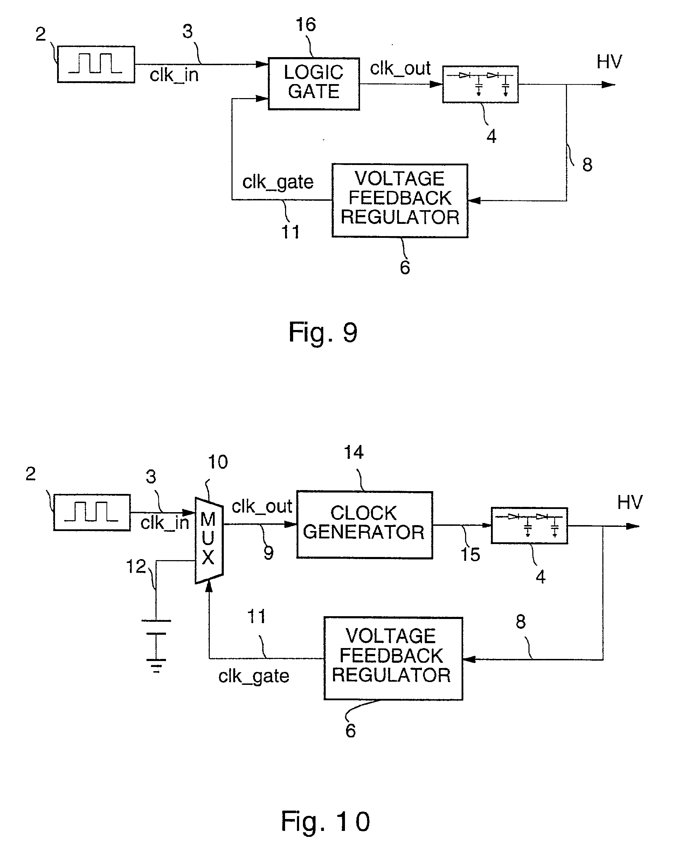

A conventional charge pump 4 is used to elevate the DC supply voltage to a determined high output regulation voltage Vreg. An oscillator generates a clock signal clk_in that can be conventionally transformed into biphased or quadriphased clock signals (see Figure 10). A regulation feedback loop 8 including a voltage feedback regulator 6 controls the output voltage HV by gating the clock signal 3 delivered by the oscillator 2. Other feedback circuits could be used, such as a current feedback regulator.

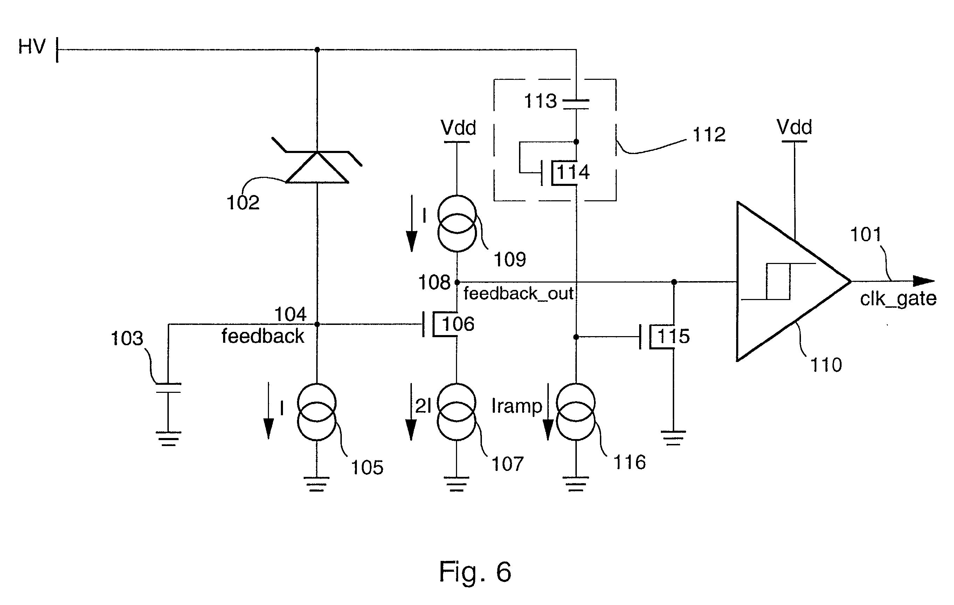

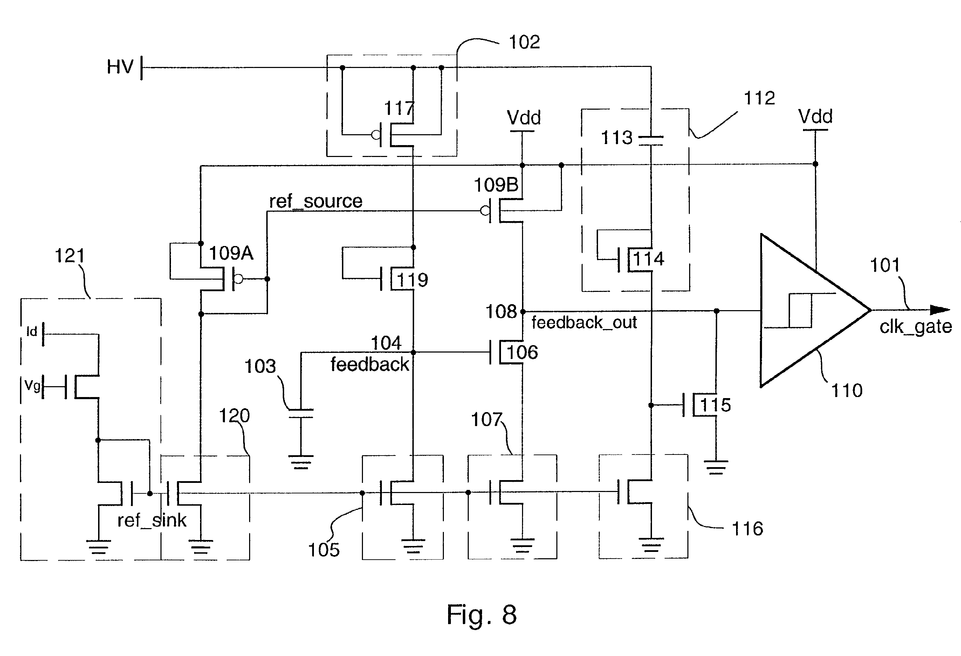

To achieve the clock gating, means for gating the clock signal, such as a multiplexer 10, are placed between the oscillator 2 and the charge pump 4. This multiplexer 10 receives at its input the clk_in signal 3 and a DC supply voltage 12. The voltage feedback regulator 6 controls the multiplexing by sending a gating signal 11 referenced clk_gate to the MUX 10. This clk_gate signal 11 is preferably a digital signal with two different levels. One level commands the output voltage HV to be pumped up, and the other level commands the output voltage HV not to be pumped up. Changing levels are controlled by the voltage feedback regulator 6 which compares the output voltage HV to a determined regulation voltage Vreg. The detailed structure of the feedback circuit will be studied more carefully with reference to Figures 6 and 8.

At the output of the voltage multiplier circuit a filter 13 is added to eliminate oscillations of the output voltage HV. The resulting voltage is a DC high voltage HV_FILTER supplying the memory programmable cells which will not deteriorate. Such a filter usually includes a low threshold transistor and a real or parasitic capacitor to regulate the output current. Such a capacitor consumes very little current.

Figure 5 shows the influence of gating the clock on the output voltage HV.

The clk_in signal 3 is the signal generated by the oscillator 2.

The clk_gate signal 11 is the gating signal generated by the voltage feedback regulator 6. This clk_gate signal has two different levels, a high level referenced h_gate and a low level referenced l_gate. The l_gate level corresponds to an output voltage HV which does not require pumping up. The h_gate level corresponds to an output voltage HV which requires pumping up. It is also conceivable to command the charge pump with reversed gating signals.

The clk_out signal 9 is the multiplexed signal generated by the MUX 10. It corresponds to the clk_in signal 3 when the clk_gate signal 11 is at the h_gate level and corresponds to an uninterrupted high level of the clk_in signal when the clk_gate signal is at the l_gate level. In this last case, the clock is "gated off'.

The HV signal represents the variation in the output voltage HV of the voltage multiplier circuit after the start-up period of the charge pump. The determined regulation voltage Vreg has already been reached at least once. So, the circuit is in its regulation mode, when it is really power efficient.

The HV_FILTER signal represents the output voltage after it has been filtered. The loss of amplitude is due to the threshold voltage of the transistor included in the filter.

Odd sections S1, S3 and S5 represent the pumping sections which are short. And even sections S2, S4 and S6 represent the gated sections which are long. During the odd sections S1, S3 and S5, the charge pump 4 is pumping up the output voltage HV. So, there is no current saving. The pumping capacitors of the charge pump are successively charged and discharged when the clk_out signal 9 respectively switches from high-to-low transition and from low-to-high transition. Thus, the output voltage HV is pumped up. During the even sections S2, S4 and S6, the storage capacitors only discharge at a rate determined by the high voltage load. So, the output voltage HV goes down and the current consumption is lowered. Further, in case of the Figure 10 embodiment which uses a biphase or quadriphase clock, during clock gated sections, the used inverters are not solicited with clock pulses. Thus, the current consumption is reduced even further.

For example, the current consumption of a conventional charge pump is approximately 300µA with a 3 Volt supply voltage. When using the same charge pump according to the invention circuit the current consumption is lowered to 25µA.

Even further consumption reduction is possible with the implementation of a lower current RC oscillator. Simulation indicates that current consumption can be reduced to less than 5µA. Such an implementation is technically realizable because of the independency of the oscillator with respect to the feedback loop.

Figure 6 shows a simplified schematic diagram of the voltage feedback regulator according to a preferred embodiment of the invention. The role of the voltage feedback regulator is to transform the output voltage information into a digital command 101 referenced clk_gate transmitted to the multiplexer which is not shown. To achieve this transformation, the regulator action is divided into several steps.

The first step is associated with voltage dropping means. The aim of these voltage dropping means is to reduce the high output voltage HV to a lower voltage. In the embodiment shown, the means are a Zener diode 102 which is used to pull down HV. But, it is possible to add some voltage dropping transistors to decrease HV a little further. A combination of a Zener diode and transistors of specific size can be used to control the temperature dependence of the high voltage regulation. Thus, the resulting voltage Vfeedback of the feedback node 104 is roughly equal to zero during start-up of the charge pump until HV reaches a higher voltage than the dropping voltage amplitude and after Vfeedback voltage is a down level shifted copy of HV voltage. The dropping amplitude depends on the Zener diode 102 and if so on the added dropping transistors, which are not shown.

HV voltage is about 15 Volts and Vfeedback voltage has to be of the order of 1 Volt. So the dropped voltage has to be about 14 Volts.

This feedback node 104 is also linked to a current sink 105 which consumes a specific small current I. Finally, the feedback node 104 is used for switching means, such as NMOS transistor 106, having a threshold voltage Vt which corresponds to the dropped determined regulation voltage Vreg, typically of 0,8 Volt. Thus, the threshold voltage Vt of the switching means added to the dropped voltage is equal to the determined regulation voltage Vreg.

The purpose of the feedback node 104 is to control the state of the switching transistor 106 with the variation in its potential Vfeedback. If Vfeedback is higher than the threshold voltage of the switching transistor 106, the transistor is in a conductive state. And if Vfeedback is lower than the threshold voltage of the switching transistor 106, the transistor is in a non conductive state.

The source electrode of said switching transistor 106 is connected to a current sink 107 which consumes a current 2I which is twice as large as the feedback node current sink 105. The ratio between these two current sinks is obtained by using current mirrors. The detailed structure will be given in Figure 8. The arrangement of elements 109,106 and 107 allows equal voltage rise and fall times of node 108 determined by current I and the capacitive load of the digitizing means 110. These controlled rise and fall times prevent oscillations in the feedback loop.

The drain electrode of the switching transistor 106 corresponds to the feedback_out node 108. This node 108 is also supplied by a current source 109 which delivers the same current I as the feedback node current sink 105 consumed. Further, the feedback_out node 108 is linked to the input of digitizing means 110. Said means 110 and the current source 109 of the feedback_out node are both supplied by an DC voltage Vdd, typically of 3 Volts. The purpose of the feedback_out node 108 is to control the digitizing means 110 with the variation in its potential (Vfeedback_out).

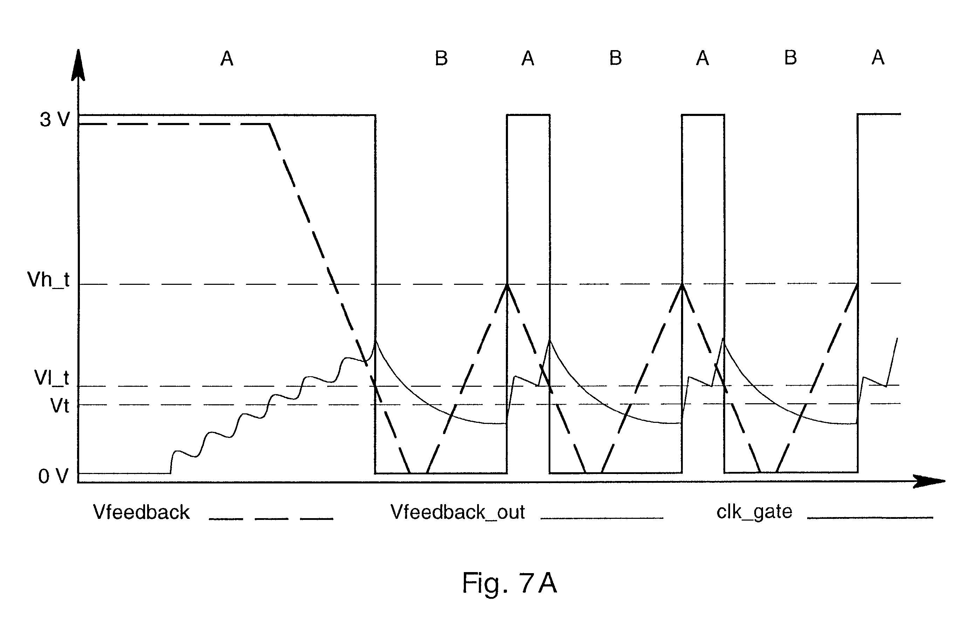

The digitizing means is typically a hysteresis trigger 110 which has two different threshold voltages to generate both the high and low levels of the digital output signal 101 called clk_gate. These two threshold voltages are, for example, about 0,9 Volt and 1,7 Volts. They could be adjusted to desired values by modifying transistor sizes comprised in the trigger. When the input voltage corresponding to the feedback_out potential decreases lower than 0,9 Volts then the clk_gate signal 101 changes levels from the high to low level (see Figure 7A). When the feedback_out potential increases higher than 1,7 Volts the clk_gate signal 101 also changes level from the low to high level.

The clk_gate signal 101 generated by the trigger 110 controls the MUX.

Some ramp rate control means 112 can be inserted between the feedback_out node 108 and the input of the trigger 110. These means 112 are preferably a capacitor 113 connected in series with a transistor 114. The added transistor 114 allows the determined output regulation voltage Vreg to be reached sooner than conventional ramp rate control means. So the effective programming time of the memory is increased.

Thus, ramp rate control means currently regulate the output voltage when the charge pump starts up. In this case, the ramp rate control means are inefficient while the added transistor 114 is in a non conductive state. The state of this transistor is determined by its threshold voltage. This threshold voltage is chosen in such a manner that the output voltage is controlled before reaching 6 Volts.

These two elements 113 and 114 determine the potential of the gate of a control transistor 115. This control transistor 115 pulls down Vfeedback_out when it is in a conductive state and leaves it unchanged when it is in a non conductive state. Thus, the ramp rate control means 112 are efficient until HV reaches regulation voltage Vreg. A current sink 116 is placed at the gate of the control transistor 115 to regulate the current at this node.

Figure 7A shows the relation between the feedback potential, the feedback_out potential and the clk_gate signal.

First, it is to be noted that the feedback potential (Vfeedback) is roughly a dropped copy of the high output voltage HV received by the voltage feedback regulator. Until HV reaches a sufficiently high voltage the feedback potential can be assimilated to zero. After, the feedback potential can be assimilated to a periodic graph with step by step increasing phases A which represent the active pumping stages of the charge pump and smoothly decreasing phases B which represent discharge of the HV voltage by a load.

If the feedback potential becomes higher than the threshold voltage Vt of the switching transistor, it means that the determined regulation voltage Vreg has been reached so the output voltage HV is sufficient and it does not need to be pumped up further. Then the switching transistor is in a conductive state. So, by applying Kirchoff's first law, the current at the input of the trigger changes sign and the feedback_out potential (Vfeedback_out) graph changes direction from increasing to decreasing.

Conversely, if the feedback potential becomes lower than the threshold voltage Vt of the switching transistor, it means that the determined regulation voltage Vreg has not been reached so the output voltage HV needs to be pumped up. Then the switching transistor is in a non conductive state. So, by applying Kirchoff's first law again, the current at the input of the trigger changes sign and the feedback_out potential graph changes direction from decreasing to increasing.

This feedback_out potential controls the input of the trigger. The trigger has two different threshold voltages, a low one VI_t and a high one Vh_t. If Vfeedback_out becomes lower than the low threshold voltage VI_t, the clk_gate signal changes level from high to low. If the feedback_out potential becomes higher than the high threshold voltage Vh_t, the clk_gate signal changes level from low to high.

Finally, the clk_gate signal controls the clock signal given to the charge pump. So, if clk_gate is at the high level, the charge pump boosts up the output voltage HV and consequently the feedback potential increases. And if clk_gate is at the low level, the clock is gated off and the charge pump is in a standby state.

These variations in Vfeedback control the state of the switching transistor as mentioned hereinbefore. Thus, the regulation feedback loop is closed.

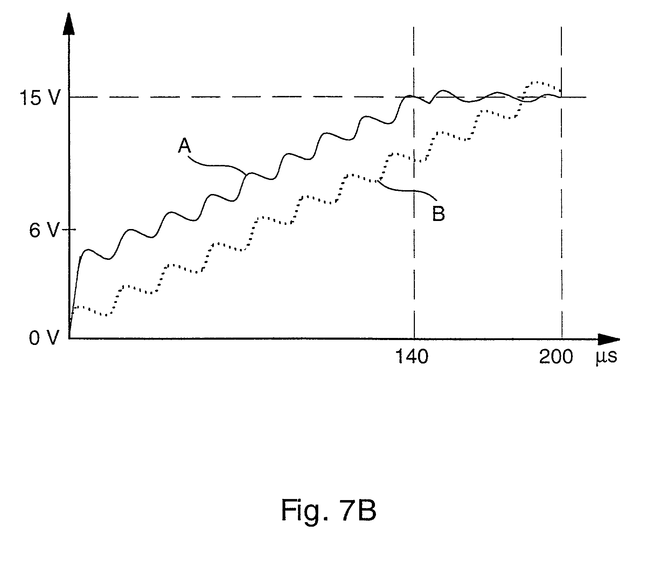

Figure 7B shows the controlled ramp of the output voltage using simple ramp rate control means, and the controlled ramp of the output voltage using ramp rate control means according to a preferred embodiment of the invention.

The graph B shows the output voltage when the ramp rate control means are immediately efficient.

In the preferred embodiment using an added transistor 114 corresponding to graph A, the ramp rate of the output voltage is controlled as soon as the added transistor is in a conductive state. Before being in a conductive state the added transistor is in a non conductive state and the ramp control means are inefficient. Thus, the rising time is shortened.

Figure 8 shows the detailed structure of the voltage feedback regulator. The complete regulator of Figure 6 is represented with the same reference numerals.

The dropping voltage means are composed of a PMOS transistor 117 which form a Zener diode 102 in breakdown mode and possibly of an additional dropping transistor 119, if necessary.

The current source 109 is defined by the reference gate voltage for current source ref_source and the transistors T109A and T109B. The different current sinks 105, 107, 116 and 120 are defined by the reference gate voltage for current sink ref_sink and a structure of transistors T105, T107, T116 and T120 disposed so as to form current mirrors with the current source 121. The current source 121 delivers the desired current at the entrance of the different current mirrors. The different transistor sizes allows the current ratio of the mirrors to be determined.

Thus the current mirrors are adjusted so to have the same current flowing in the current sinks or source 105, 109 and 120. The current flowing in the current sink 107 is adjusted so to be two times bigger than the aforementioned current. The current flowing in the current sink 116 can be independent from the aforementioned currents.

Figure 9 shows the invention according to another embodiment. The reference numerals correspond to the references in Figure 4.

The voltage multiplier circuit shown uses different means for gating the clock signal 3 of the oscillator 2. The means used are a simple logic gate 16 which receives two entries, the clk_in signal 3 and the gating signal 11 which is furnished by the voltage feedback regulator 6.

Figure 10 shows an embodiment using a multiphase clock according to the invention. The reference numerals correspond to the references in Figure 4.

The clk_out signal 11 is received by a clock generator 14 which uses in particular inverters to divide the incoming clk_out signal into a multiphase clock signal 15. This kind of multiphase clock allows the different stages of the charge pump to be controlled more precisely.

It is to be noted that this description mentions the use of MOS transistor technology, but it is also possible to use some others transistor technologies such as bipolar transistors or junction transistors.

It is also to be noted that this description mentions the generation of positive high voltage, but it is also possible to generate medium level voltages or negative voltages using the same clock gating feedback technique.

It is understood that the above described embodiment is merely illustrative of the many possible specific embodiments which can represent principles of the present invention. Numerous and varied other arrangements can readily be devised in accordance with these principles by those skilled in the art without departing from the scope and spirit of the invention.

## Claims

1. Voltage multiplier circuit in particular for programmable memories, said multiplier circuit being supplied by a low voltage and including an oscillator (2) which generates a clock signal (3), a charge pump circuit (4) controlled on the basis of said clock signal in order to generate a high output voltage (HV), a regulation feedback loop (8) including a feedback circuit (6) connected to the output of said charge pump circuit **characterized in that** means (10, 12) for gating said clock signal are placed in said feedback loop between said oscillator and said charge pump circuit, said means being controlled by a gating signal (11), received from said feedback circuit, which depends on the comparison of said high output voltage to a determined regulation voltage (Vreg).

2. Voltage multiplier circuit according to claim 1, **characterized in that** said clock signal gating means comprise a multiplexer (10) receiving said clock signal from said oscillator and a DC supply voltage (12), both received signals being controlled by said gating signal (11) in order to let one pass, the output of the multiplexer being connected to said charge pump circuit.

3. Voltage multiplier circuit according to claim 1 or 2, **characterised in that** said feedback circuit is a voltage feedback regulator (6).

4. Voltage multiplier circuit according to claim 3, **characterised in that** said voltage feedback regulator includes voltage dropping means (102, 119) and switching means (106) which decouple the output of said dropping means and the input of digitizing means (110).

5. Voltage multiplier circuit according to claim 4, **characterized in that** said switching means (106) have a threshold voltage (Vt) which corresponds to the dropped determined regulation voltage (Vreg).

6. Voltage multiplier circuit according to claim 4 or 5, **characterized in that** said gating signal is a digital signal having two different levels, a low and a high level and **in that** said digitizing means are a hysteresis trigger with two different threshold voltages which commands said both levels of said gating signal.

7. Voltage multiplier circuit according to any of the preceding claims, **characterized in that** said feedback circuit further includes ramp rate control means (112, 115).

8. Voltage multiplier circuit according to claim 7, **characterized in that** said ramp rate control means includes in particular switching means (114).

9. Voltage multiplier circuit according to any of claims 2 to 8, **characterized in that** a clock generator (14) transforms the multiplexer output signal into a multiphase clock signal (15).

10. Voltage multiplier circuit according to claim 1, **characterized in that** said clock signal gating means are a logic gate (16).
